# EUROPÄISCHE PATENTSCHRIFT

(11) **EP 2 370 697 B1**
(45) Veröffentlichungstag und Bekanntmachung des Hinweises auf die Patenterteilung: **16.03.2016**
(21) Anmeldenummer: 09740156.6
(22) Anmeldetag: 27.10.2009
(51) Int. Cl.: F04B 35/04, F04B 39/00, F16C 3/12

(54) **KOMPRESSOR**
COMPRESSOR
COMPRESSEUR

(30) Priorität: 25.11.2008 DE 102008037584
(43) Veröffentlichungstag der Anmeldung: 05.10.2011
(73) Patentinhaber: Continental Reifen Deutschland GmbH, 30165 Hannover (DE)
(72) Erfinder: DETERING, Rainer, 30926 Seelze (DE)
(74) Vertreter: Finger, Karsten
(86) Internationale Anmeldenummer: PCT/EP2009/064107
(87) Internationale Veröffentlichungsnummer: WO 2010/060708

(56) Entgegenhaltungen:
- WO-A-02/057630
- DE-U1-202004 017 964
- FR-A- 588 113
- FR-A- 2 718 203
- US-A- 5 163 818
- US-A1- 2004 035 244

## Beschreibung

Die Erfindung betrifft einen Kompressor mit einem Motor, der über ein Getriebe einen Kolbenverdichter antreibt. Das Getriebe weist einen Kurbeltrieb auf, der eine Kurbelwelle mit Wellenzapfen, Kurbelwangen und Hubzapfen beinhaltet, sowie ein mit der Kurbelwelle drehfest verbundenes Kurbelrad mit einer Außenverzahnung, die mit dem Abtriebsritzel des Motors kämmt und ein mit einem Pleuellager auf dem Hubzapfen gelagertes Pleuel, welches einen Kolben in einem Zylinder translatorisch oszillierend antreibt.

Üblicherweise bestehen klein bauende Kompressoreinheiten aus einer Reihe von Bauteilen, wie z. B. Motorflansche, Kurbelgehäuse und Lagerungen, Getriebesätze, Zylinderbauteile, Pleuelstange etc., die in ihren Abmessungen eng toleriert sind und daher sowohl in der Herstellung als auch in der Montage einen relativ hohen Aufwand und somit kostenintensive Arbeitsschritte erfordern, und die zudem mechanisch hoch belastet sind und deswegen aus relativ hochwertigen und damit teuren Materialien bestehen.

Die DE 44 29 097 A1 offenbart einen solchen Kolbenverdichter für gasförmige Medien, bei dem sich an die dortige Abtriebswelle des Motors zunächst ein mit einem Deckel versehenes Verdichtergehäuse anschließt, welches das mit einem Exzenterzapfen ausgebildete Kurbelrad, das Pleuel mit dem Pleuellager und einen einschraubbaren Zylinderkörper aufnimmt. Zusätzlich ist das Verdichtergehäuse mit dem Zylinderdeckel verschraubt, welcher auch das Auslassventil und die Auslassleitung beinhaltet. Das Kurbelrad ist einseitig gelagert und dementsprechend erheblichen Belastungen und wechselnden Momenten ausgesetzt. Dadurch werden sowohl an das Kurbelrad als solches, an die Lagerung des Kurbelrades als auch an die Gehäuseausbildung erhebliche konstruktive und werkstofftechnische Anforderungen gestellt. Die betrifft ebenfalls die Montage. Eine solche Ausführung eines Kompressors ist damit jedoch für einfachste und in Großserien hergestellte Geräte aus Kostengründen nur bedingt einsetzbar.

Kompressoreinheiten zur Luftverdichtung in Form von tragbaren / transportablen Geräten, also Kleinkompressoren z. B. für das Aufpumpen von Autoreifen oder Schlauchbooten, benötigen aus Kostengründen einfachste Bauteile bei einer trotzdem sicher funktionsfähigen Konstruktion.

Im Stand der Technik zeigt die US 5 163 818 A eine gattungsähnliche Ausführung eines Antriebs für eine Doppelpumpe, bei dem ein Doppeltrieb mit jeweils einer fliegend gelagerten Kurbelwelle die daran befestigten Kurbelräder antreibt. Hier ist eine stabile und schwere Ausführung vorhanden, die sich wenig für tragbare Geräte eignet.

Die WO 2002/057630 A offenbart einen Kompressor mit einer fliegend gelagerten, d. h. einseitig gelagerte Kurbelwelle und ist ebenfalls in Ihrer Konstruktion eher aufwendig gestaltet.

Die US 2004/035244 A1 offenbart eine zweigeteilte Kurbelwelle für Verbrennungsmaschinen und Kompressoren mit einem eingesetzten Ausgleichsgewicht und einer Zapfen-Muffen-Verbindung zwischen den beiden Kurbelwellenteilen. Auch hier ist eine relativ schwere Konstruktion dargestellt, die kaum für tragbare Geräte angepasst ist.

Davon ausgehend bestand die Aufgabe der Erfindung darin, einen Kompressor insbesondere zur Luftverdichtung mit einem Hubkolbenverdichter innerhalb tragbarer / transportabler Geräte bereitzustellen, welcher möglichst auf einfachste Weise herstellbare Bauteile bei gleichzeitig sicherer Funktionsfähigkeit aufweist, einfach und präzise montiert werden kann und insgesamt eine Konstruktion bereitstellt, die trotz hoher Belastungen eine lange Lebensdauer aufweist.

Gelöst wird diese Aufgabe durch die Merkmale des Hauptanspruchs. Weitere vorteilhafte Ausbildungen sind in den Unteransprüchen offenbart.

Die erfindungsgemäße Kompressoreinheit ist dadurch gekennzeichnet, dass die Kurbelwelle mit ihren Wellenzapfen beidseitig in einem Kurbelgehäuse gelagert ist und dass die Kurbelwelle aus zwei Teilwellen besteht, welche in Axialrichtung der Kurbelwelle miteinander verbindbar sind. Die beidseitige Lagerung ist gegenüber der "fliegenden" einseitigen Lagerung wesentlich höher belastbar und kann hier erfindungsgemäß bei einer einfachen Montage dadurch realisiert werden, dass die Kurbelwelle axial teilbar ist. Es ergibt sich durch die erfindungsgemäße Ausführung ein wesentlich besserer Rundlauf, die Wellenlager können zudem kleiner dimensioniert werden und das Kurbelgehäuse kann kostengünstiger gebaut werde. Der wesentliche Vorteil einer solchen geteilten Kurbelwelle ist aber, dass ein hoch tragfähiges Wälzlager als Pleuellager auf einfachste Weise montiert werden kann. Das Wälzlager wird direkt auf dem Hubzapfen des entsprechenden Wellenteils aufgebracht und die beiden Wellenteile danach zusammengesetzt. Damit kann auch der sonst oft nötige teilbare Lagersitz des Pleuels einteilig ausgebildet werden, was die Herstellung auch hier kostengünstiger und leichter macht.

Die Teilwellen der Kurbelwelle sind dabei so ausgebildet, dass sie formschlüssig miteinander verbindbar sind. Ein solche Verbindung ist sehr einfach zu realisieren. Schraubverbindungen sind hier z.B. ebenso geeignet wie Steckverbindungen oder Rast- bzw. Schnappverbindungen.Die Teilwellen weisen zudem erfindungsgemäß eine Zapfen-Muffen-Verbindung mit einer komplementären Längsverzahnung auf. Eine solche Steckverbindung eines außen gezahnten Zapfens in einer innen gezahnten Muffe erlaubt eine sichere und hoch belastbare Drehmomentenübertragung. Natürlich sind verschiedene Formen einer solchen so genannten "Viel-Keil-Verbindung" möglich, je nach übertragenem Drehmoment, wie auch andere im Maschinenbau übliche Arten von Nut-Feder-Verbindung.

Eine weitere vorteilhafte Ausbildung besteht darin, dass die Verbindung der beiden Teilwellen eine Kodierung beinhaltet, die ein Verbinden nur in einer relativ zueinander definierten Stellung erlaubt. So kann etwa bei einer komplementären Längsverzahnung ein Zahn "fehlen" und die komplementäre Nut nicht vorhanden sein.

Vorteilhafterweise weisen die Teilwellen Sicherungselemente auf, die ein Lösen der Verbindung verhindern. Dies ist insbesondere für die Montage wichtig. Nach dem Einbau sind die einzelnen Elemente in der Regel durch das Getriebegehäuse aufgenommen und können nicht mehr verschoben werden. Eine besonders einfache Art der Sicherung besteht darin, dass das Sicherungselement als Sicherungsstift oder -splint ausgebildet ist.

Eine weitere vorteilhafte Ausbildung besteht darin, dass zur drehfesten Verbindung zwischen Kurbelwelle und Kurbelrad letzteres mit einer der Teilwellen formschlüssig verbunden ist. Dies vereinfacht die Montage erheblich und erlaubt beliebige Gestaltungen, je nach übertragenem Drehmoment. Natürlich können auch hier wieder die genannten "Viel-Keil-Verbindungen" oder andere Nut-Feder-Verbindungen zum Einsatz kommen. Dabei ist es besonders vorteilhaft, dass die formschlüssige Verbindung durch eine in eine Ausnehmung des Kurbelrades eingreifende und auf einer Teilwelle in beliebiger Art ausgebildete Momentenstütze erfolgt, beispielsweise durch einen nierenförmigen und zum Kurbelrad hin ausgebildeten Vorsprung an der entsprechenden Kurbelwange.

Eine weitere vorteilhafte Ausbildung besteht darin, dass die Kurbelwelle aus Zinkdruckguss besteht und das Kurbelgehäuse und der Zylinder aus Kunststoff bestehen. Damit ist die Werkstoffauswahl im Zusammenspiel zwischen Belastbarkeit der Konstruktion und Kosten bestens ausgerichtet. Eine weitergehende Optimierung in diesem Sinne kann dadurch erfolgen, dass das Kurbelrad aus Kunststoff besteht.

Aufgrund seiner hohen Belastbarkeit und aufgrund seiner aus Konstruktion und Werkstoffauswahl resultierenden hohen Förderleistung eignet sich der erfindungsgemäße Kompressor besonders für tragbare Kompressoreinheiten zum Aufpumpen von Fahrzeugreifen und anderen luftgefüllten Gegenständen, wie etwa Luftmatratzen, Schlauchboote, Bojen, Rettungskörpern, Speicherblasen von Ausdehnungsgefäßen, Aufprallschutzkörpern etc.

Durch die erfindungsgemäße Ausführung werden einerseits die Anzahl der Teile, das Gewicht der Kompressoreinheit und die Anzahl der Bearbeitungsschritte bei der Herstellung reduziert, wodurch eine besonders kostengünstige Ausbildung der Kompressoreinheit erreicht wird.

Anhand eines Ausführungsbeispieles soll die Erfindung näher erläutert werden. Es zeigen
- Fig. 1: einen erfindungsgemäßen Kompressor mit der aus zwei Teilwellen bestehenden verbunden Kurbelwelle im Zusammenbau mit teilweise geschnittenen Bauteilen
- Fig. 2: die das Kurbelrad aufnehmende Teilwelle des erfindungsgemäßen Kompressors gem. Fig.1, im Schnitt und in Vorder- und Rückansicht
- Fig. 3: die das Pleuel mit dem Pleuellager aufnehmende Teilwelle des erfindungsgemäßen Kompressors gem. Fig.1, im Schnitt und in Vorder- und Rückansicht

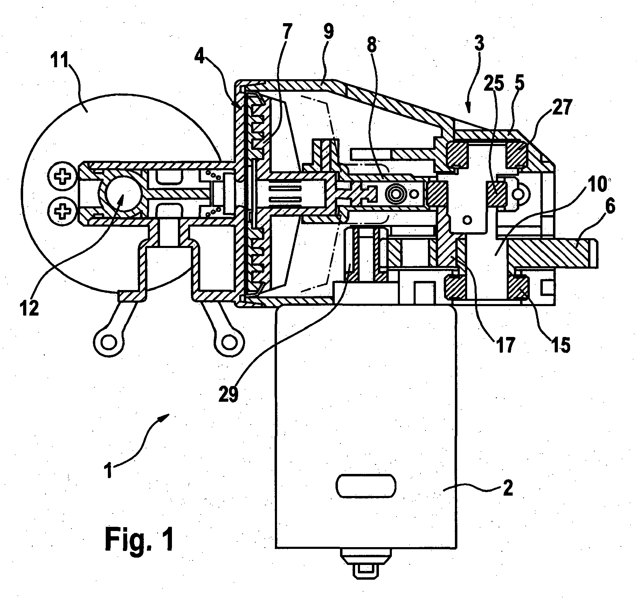

Die Fig. 1 zeigt einen erfindungsgemäßen Kompressor 1 mit teilweise geschnittenen Bauteilen, aufweisend einen Motor 2 und einen über einen Schubkurbeltrieb 3 angetriebenen Hubkolbenverdichter 4. Der in einem Kurbelgehäuse 5 angeordnete Schubkurbeltrieb 3 besteht aus einem Kurbelrad 6 und einem einerseits über einen Hubzapfen mit dem Kurbelrad 6 und andererseits mit einem Kolben 7 verbundenen Pleuel 8. Der Kolben 7 ist in einem Zylinder 9 bewegbar, wobei letzterer mit dem Kurbelgehäuse 5 einteilig ausgebildet und als ein Bauteil abtriebsseitig am Motor 2 befestigt ist.

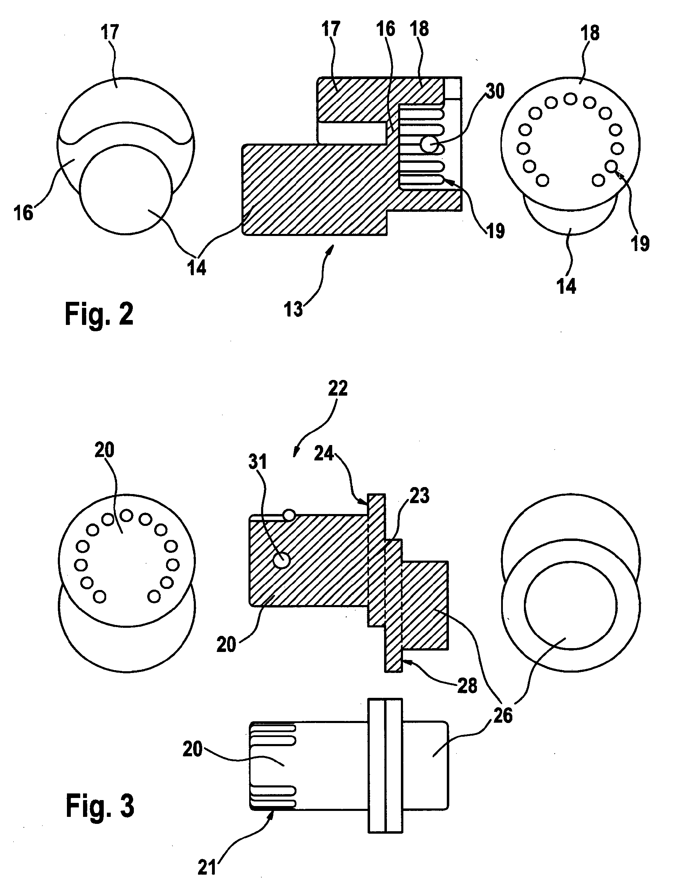

Die Kurbelwelle 10 besteht aus zwei Teilwellen, wie in den Fig. 2 und 3 näher dargestellt. Auf der Druckseite des Hubkolbenverdichters sind hier nicht näher dargestellte Bedien-und Leitungselemente angeordnet, wie hier das Manometer 11 und die Auslassventile 12.

Fig. 2 zeigt die das Kurbelrad aufnehmende Teilwelle 13 des erfindungsgemäßen Kompressors 1 gem. Fig.1, als technische Zeichnung im Schnitt sowie in Vorder- und Rückansicht. Die Teilwelle 13 der Kurbelwelle 10 weist einen Wellenzapfen 14 auf, der im Zusammenbau über das Wälzlager 15 im Kurbelgehäuse/Getriebegehäuse 5 gelagert ist.

Weiterhin erkennt man an der Teilwelle 13 eine Kurbelwange 16, die zur drehfesten und formschlüssigen Verbindung zwischen Kurbelwelle 10 bzw. Teilwelle 13 und Kurbelrad 6 eine in eine Ausnehmung des Kurbelrades 6 eingreifende Momentenstütze 17 aufweist. Die Momentenstütze 17 ist als in der Vorderansicht nierenförmiger und zum Kurbelrad hin ausgebildeten Vorsprung ausgebildet.

Der zur Teilwelle 13 gehörige Teil des Hubzapfen ist als Muffenende 18 mit einer Vielkeil-Innenverzahnung 19 ausgebildet und dient der Aufnahme des zugehörigen und mit einer komplementären Außenverzahnung 21 ausgebildeten Zapfenendes 20 der in der Fig. 3 dagestellten Teilwelle 22. Das Zapfenende 20 ist neben der Außenverzahnung 21 als Sitz zur Aufnahme des als Wälzlager ausgebildeten Pleuellagers 25 gestaltet und stellt somit den eigentlichen Hubzapfen, d.h. den Aufnahmebereich für das Pleuellager dar.

Auch die Teilwelle 22 weist eine Kurbelwange 23 auf, die einerseits einen Anschlag 24 als axiale Fixierung des Pleuel-Lagers 25 bereitstellt und andererseits stufig übergeht in den Wellenzapfen 26, der im Zusammenbau über das Wälzlager 27 im Kurbelgehäuse/Getriebegehäuse 5 gelagert ist. Hierzu besitzt die Kurbelwange einen weiteren Anschlag 28, der eine axiale Fixierung für das Wälzlager 27 bereitstellt.

Werden die beiden Teilwellen 13 und 22 über Muffenende 18 und Zapfenende 20 miteinander verbunden, so entsteht die in Fig. 1 im Zusammenbau dargestellte gekröpfte Kurbelwelle 10. Man erkennt nun in der Rückschau auf die Fig. 1, dass das mit der Kurbelwelle 10 bzw. Teilwelle 13 drehfest verbundenes Kurbelrad 6 mit seiner Außenverzahnung mit dem Abtriebsritzel 29 des Motors 2 kämmt und damit das mit dem Pleuellager 25 auf dem Hubzapfen gelagerte Pleuel 8 antreibt.

Die aus zwei Teilwellen bestehende Kurbelwelle 10 ist im Zusammenbau mit ihren Wellenzapfen 14 und 26 beidseitig im Kurbelgehäuse 5 gelagert.

In der Zusammenschau der Fig. 2 und 3 erkennt man auch die komplementären Bohrungen 30 und 31, die zur Aufnahme eines Sicherungsstiftes dienen.

### Bezugszeichenliste

- 1: Kompressor
- 2: Motor
- 3: Schubkurbeltrieb
- 4: Hubkolbenverdichter
- 5: Kurbelgehäuse
- 6: Kurbelrad
- 7: Kolben
- 8: Pleuel
- 9: Zylinder
- 10: Geteilte Kurbelwelle
- 11: Manometer
- 12: Auslassventile
- 13: Teilwelle
- 14: Wellenzapfen
- 15: Wälzlager
- 16: Kurbelwange
- 17: Momentenstütze
- 18: Muffenende
- 19: Vielkeil-Innenverzahnung
- 20: Zapfenende
- 21: Vielkeil-Außenverzahnung
- 22: Teilwelle
- 23: Kurbelwange
- 24: Anschlag
- 25: Pleuellager
- 26: Wellenzapfen
- 27: Wälzlager
- 28: Anschlag
- 29: Abtriebsritzel
- 30: Bohrung
- 31: Bohrung

## Patentansprüche

1. Kompressor (1) zur Luftverdichtung in tragbaren Geräten mit einem Motor (2), der über ein Getriebe einen Kolbenverdichter (4) antreibt, wobei das Getriebe einen Kurbeltrieb (3) aufweist, welcher folgende Einrichtungen beinhaltet:
- eine Kurbelwelle (10) mit Wellenzapfen (14, 26), Kurbelwangen (16, 23) und Hubzapfen (18, 21),
- ein mit der Kurbelwelle (10) drehfest verbundenes Kurbelrad (6) mit einer Außenverzahnung, die mit einem Abtriebsritzel des Motors (2) kämmt,
- ein mit einem Pleuellager (25) auf dem Hubzapfen gelagertes Pleuel (8), welches einen Kolben (7) in einem Zylinder (9) translatorisch oszillierend antreibt,
**dadurch gekennzeichnet,**
- **dass** die Kurbelwelle (10) mit ihren Wellenzapfen (14, 26) beidseitig in einem Kurbelgehäuse (5) gelagert ist und
- **dass** die Kurbelwelle (10) aus zwei Teilwellen (13, 22) besteht, welche in Axialrichtung der Kurbelwelle (10) formschlüssig miteinander verbindbar sind
- wobei die Teilwellen (13, 22) eine Zapfen-Muffen-Verbindung mit einer komplementären Längsverzahnung (19, 21) aufweisen.

2. Kompressor nach Anspruch 1, bei dem die Verbindung der zwei Teilwellen (13, 22) eine Kodierung beinhaltet, die ein Verbinden nur in einer relativ zueinander definierten Stellung erlaubt.

3. Kompressor nach Anspruch 1 oder 2, bei dem die Teilwellen (13, 22) Sicherungselemente aufweisen, die ein Lösen der Verbindung verhindern.

4. Kompressor nach Anspruch 3, bei dem das Sicherungselement als Sicherungsstift oder -splint ausgebildet ist.

5. Kompressor nach einem der Ansprüche 1 bis 4, bei dem zur drehfesten Verbindung zwischen Kurbelwelle (10) und Kurbelrad (6) letzteres mit einer der Teilwellen (13) formschlüssig verbunden ist.

6. Kompressor nach Anspruch 5, bei dem die formschlüssige Verbindung durch eine in eine Ausnehmung des Kurbelrades (6) eingreifende und auf einer Teilwelle (13) ausgebildete Momentenstütze (17) erfolgt.

7. Kompressor nach einem der Ansprüche 1 bis 6, bei dem die Kurbelwelle (10) aus Zinkdruckguss besteht und das Kurbelgehäuse (5) und der Zylinder (9) aus Kunststoff bestehen.

8. Kompressor nach einem der Ansprüche 1 bis 7, bei dem das Kurbelrad (6) aus Kunststoff besteht.

9. Tragbare Kompressoreinheit zum Aufpumpen von Fahrzeugreifen und anderen luftgefüllten Gegenständen mit einem Kompressor nach einem oder mehreren der Ansprüche 1 bis 8.

## Claims

1. Compressor (1) for the compression of air in portable appliances, having a motor (2) which drives a piston compressor (4) via a mechanism, wherein the mechanism has a crank drive (3) which comprises the following means:
- a crankshaft (10) with shaft stubs (14, 26), crank webs (16, 23) and crankpins (18, 21),
- a crank wheel (6) which is connected rotationally conjointly to the crankshaft (10) and which has an external toothing which meshes with a drive-output pinion of the motor (2),
- a connecting rod (8) which is mounted by way of a connecting-rod bearing (25) on the crankpin and which drives a piston (7) in translational oscillating fashion in a cylinder (9),
**characterized**
- **in that** the crankshaft (10) is, by way of its shaft stubs (14, 26), mounted at both sides in a crankcase (5), and
- **in that** the crankshaft (10) is composed of two sub-shafts (13, 22) which are connectable in positively locking fashion to one another in an axial direction of the crankshaft (10),
- wherein the sub-shafts (13, 22) have a journal-sleeve connection with a complementary spline toothing (19, 21).

2. Compressor according to Claim 1, in which the connection of the two sub-shafts (13, 22) comprises a coding which permits a connection only in a defined position relative to one another.

3. Compressor according to Claim 1 or 2, in which the sub-shafts (13, 22) have securing elements which prevent a release of the connection.

4. Compressor according to Claim 3, in which the securing element is in the form of a securing pin or splint.

5. Compressor according to one of Claims 1 to 4, in which, for the rotationally conjoint connection between crankshaft (10) and crank wheel (6), the latter is connected in positively locking fashion to one of the sub-shafts (13).

6. Compressor according to Claim 5, in which the positively locking connection is realized by way of a torque support (17) which engages into a recess of the crank wheel (6) and which is formed on one sub-shaft (13).

7. Compressor according to one of Claims 1 to 6, in which the crankshaft (10) is composed of die cast zinc, and the crankcase (5) and the cylinder (9) are composed of plastic.

8. Compressor according to one of Claims 1 to 7, in which the crank wheel (6) is composed of plastic.

9. Portable compressor unit for the inflation of vehicle tyres and other air-filled articles, having a compressor according to one or more of Claims 1 to 8.

## Revendications

1. Compresseur (1) pour la compression de l'air dans des appareils portatifs comprenant un moteur (2) qui entraîne un compresseur à piston (4) par le biais d'une transmission, la transmission présentant une commande à manivelle (3) qui contient les dispositifs suivantes :
- un vilebrequin (10) avec des tourillons d'arbre (14, 26), des flasques de vilebrequin (16, 23) et des tourillons de moyeu (18, 21),
- une roue de vilebrequin (6) connectée de manière solidaire en rotation au vilebrequin (10) avec une denture extérieure qui s'engrène avec un pignon de sortie du moteur (2),
- une bielle (8) supportée avec un palier de bielle (25) sur le tourillon de moyeu, laquelle entraîne par un mouvement oscillant de translation un piston (7) dans un cylindre (9),
**caractérisé en ce que**
- le vilebrequin (10) est supporté avec ses tourillons d'arbre (14, 26) de chaque côté dans un carter de vilebrequin (5) et
- le vilebrequin (10) se compose de deux arbres partiels (13, 22) qui peuvent être connectés l'un à l'autre par engagement par correspondance de formes dans la direction axiale du vilebrequin (10),
- les arbres partiels (13, 22) présentant une connexion à tourillons et manchons avec une denture longitudinale complémentaire (19, 21).

2. Compresseur selon la revendication 1, dans lequel la connexion des deux arbres partiels (13, 22) contient un codage qui permet une connexion uniquement dans une position mutuelle définie.

3. Compresseur selon la revendication 1 ou 2, dans lequel les arbres partiels (13, 22) présentent des éléments de fixation qui empêchent un desserrage de la connexion.

4. Compresseur selon la revendication 3, dans lequel l'élément de fixation est réalisé sous forme de broche ou de goupille de fixation.

5. Compresseur selon l'une quelconque des revendications 1 à 4, dans lequel, pour la connexion solidaire en rotation entre le vilebrequin (10) et la roue de vilebrequin (6), cette dernière est connectée par engagement par correspondance de formes à l'un des arbres partiels (13).

6. Compresseur selon la revendication 5, dans lequel la connexion par engagement par correspondance de formes est réalisée par un support de couple (17) s'engageant dans un évidement de la roue de vilebrequin (6) et réalisée sur un arbre partiel (13).

7. Compresseur selon l'une quelconque des revendications 1 à 6, dans lequel le vilebrequin (10) se compose de zinc moulé sous pression et le carter de vilebrequin (5) et le cylindre (9) se composent de plastique.

8. Compresseur selon l'une quelconque des revendications 1 à 7, dans lequel la roue de vilebrequin (6) se compose de plastique.

9. Unité de compresseur portative pour gonfler des pneumatiques de véhicule et d'autres objets remplis d'air avec un compresseur selon l'une quelconque ou plusieurs des revendications 1 à 8.
